# EUROPÄISCHE PATENTSCHRIFT

(11) **EP 1 504 646 B1**
(45) Veröffentlichungstag und Bekanntmachung des Hinweises auf die Patenterteilung: **15.11.2006**
(21) Anmeldenummer: 04004410.9
(22) Anmeldetag: 26.02.2004
(51) Int. Cl.: A01D 17/10, B65G 15/52

(54) **Stab für umlaufende Stabbänder**
Bar for a bar conveyor
Barre pour convoyeur à barres

(30) Priorität: 27.02.2003 DE 10308823
(43) Veröffentlichungstag der Anmeldung: 09.02.2005
(73) Patentinhaber: Artemis Kautschuk- und Kunststoff-Technik GmbH, 30559 Hannover (DE)
(72) Erfinder: Mulder, Jan Harm, 7751 DN Dalen (NL)
(74) Vertreter: Depmeyer, Jochen

(56) Entgegenhaltungen:
- EP-A- 1 369 018
- DE-C- 945 874
- DE-U- 20 011 436
- DE-U- 29 703 270

## Beschreibung

Die Erfindung betrifft einen Stab für umlaufende Stabbänder für landwirtschaftliche Maschinen (Erntemaschinen), insb. für Siebstabbänder, wobei der Stab aus einem Stabkörper und aus zur Auflage auf biegsamen, zugfesten Gurten dienenden metallischen Befestigungsstücken zusammengesetzt ist, wobei ein Befestigungsstück mit einem ersten, abgeflachten Längenabschnitt auf einem der Gurte durch Niete oder dgl. befestigt ist, und wobei ein zweiter Längenabschnitt des Befestigungsstückes hülsenartig zur Aufnahme des Stabkörpers ausgebildet ist. Die Erfindung betrifft ferner ein Verfahren zur Herstellung eines derartigen Stabes.

Stabbänder werden z.B. zur Förderung von Feldfrüchten wie Kartoffeln verwendet, wobei die Feldfrüchte auf den Stäben liegend transportiert werden und wobei Erde, Steine und dgl. zwischen den Stäben hindurch fallen, so dass schon während des Transportes eine Sortierung und grobe Reinigung des Fördergutes stattfindet. Üblicherweise besteht ein Stabband aus zwei zueinander beabstandeten, endlosen, biegsamen, zugfesten Gurten, die aus durch Festigkeitsträger verstärktem Gummi bestehen und auf geeigneten Treib-, Stütz und Umlenkrollen umlaufen können und durch zueinander parallele Stäbe miteinander verbunden sind.

Nach herkömmlicher Bauweise können die Stäbe eines Stabbandes ganz aus Stahl bestehen. Ein derartiges Stabband ist jedoch sehr schwer. Durch die Substitution von Stahl durch leichte Verbundwerkstoffe kann das Gewicht eines Stabbandes deutlich verringert werden. Bei derartigen Stäben kann der Stabkörper aus einem geraden Stab aus einem festen, aber leichten Werkstoff, z. B. glafaserverstärktem Kunststoff, bestehen, der mit Hilfe von an den Stabenden angeordneten Hülsen aus Metall an den Gurten befestigt ist, wobei die Enden des Stabes jeweils ein Stück weit in die Hülsen eingeschoben und dort durch Verkrimpen gehalten sind, während die überstehenden Enden der Hülsen flach gedrückt und mit Löchern zur Befestigung an den Gurten mittels Nieten oder dgl. versehen sind. Bei derartigen Stabbändern haben sich im Betrieb jedoch eine Reihe von Nachteilen gezeigt. So besteht die Gefahr des Verbiegens einer Hülse insb. im flachgedrückten Bereich oder im Übergangsbereich zwischen dem flachgedrückten und dem hülsenförmigen, den Stabkörper aufnehmenden Bereich. Die Verbindung zwischen Hülse und Stabkörper kann sich lösen. Ferner ist die Wandstärke der Hülsen zu gering für ein Einsenken der Nietköpfe, so dass man auf der dem Gurt abgewandten Seite der Hülse keine glatte Oberfläche herstellen kann. Die Stäbe können nur an ihren Enden mit den Gurten verbunden werden; die Befestigung weiterer Gurte zwischen den Randgurten ist nicht möglich. In einigen Anwendungsfällen werden gekröpfte Befestigungselemente für die Stäbe gewünscht, durch die man einen Stab auf einer Ebene anordnen kann, die oberhalb oder unterhalb der durch die Bänder bestimmten Ebene liegt. Eine derartige gekröpfte Ausbildung ist bei einem mit Hülsen an den Enden gehaltenen Stab aus glasfaserverstärktem Kunststoff jedoch nicht möglich.

Diese Nachteile können nur zum Teil durch einen bekannten Stab der eingangs genannten Art vermieden werden, bei dem der erste, abgeflachte Längenabschnitt der Befestigungsstücke ein massives, durch Schmieden aus einem Vollstab hergestelltes Teil ist (bekannt aus DE 200 11 436 U1). Der Stabkörper wird bei diesem bekannten Stab von dem zweiten, hülsenartigen Längenabschnitt aufgenommen. Der zweite Längenabschnitt kann durch eine gesondert hergestellte Hülse gebildet sein, die durch Klemmen oder Schweißen fest mit dem ersten Längenabschnitt verbunden ist. Er kann aber auch durch ein Sackloch in einem Vollstab gebildet sein, und einstückig in den ersten Längenabschnitt übergehen. In allen Fällen ist die Herstellung der Befestigungsstücke mit erheblichem Aufwand verbunden.

Der Erfindung liegt die Aufgabe zugrunde, einen Stab der eingangs genannten Art vorzuschlagen, bei dem die Verbindung zwischen den Stabkörpern und den Gurten hoch beanspruchbar, aber auch mit geringem Aufwand herstellbar ist und nicht nur an den Stabenden, sondern auch in der Stabmitte angeordnet werden kann.

Zur Lösung dieser Aufgabe wird aufgrund der Erfindung vorgeschlagen, dass der abgeflachte Längenabschnitt des Befestigungsstückes hülsenartig ausgebildet ist und den Stabkörper aufnimmt.

Ein derartiger Stab ist leicht und biegesteif und vermeidet die oben genannten Nachteile bekannter Stäbe. Er kann in einfacher Weise hergestellt werden, indem Hülsen auf den Stabkörper aufgeschoben und flachgedrückt werden. Stabkörper und Hülse sind dadurch fest miteinander verbunden und stützen sich gegenseitig. Bei einem Stabkörper aus glasfaserverstärktem Kunststoff wird in dem zusammengepreßten Bereich lediglich die Matrix des Verbundwerkstoffes aufgebrochen. Die Stabilität gebende Wirkung der Fasern bleibt größtenteils erhalten. Die Befestigungsstücke können auf diese Weise an beliebiger Stelle am Stabkörper angebracht werden. Die Verformung der Hülsen erfolgt vorzugsweise in einem Gesenk. Den Befestigungsstücken können dadurch genau bestimmte Formen verliehen werden; es können auch gekröpfte Befestigungsstücke hergestellt werden. Vorzugsweise haben die Hülsen im Ausgangszustand einen Innendurchmesser, der etwas größer ist als der Außendurchmesser des Stabkörpers.

Vorzugsweise schließen die hülsenartigen Befestigungsstücke an den Enden des Stabes bündig mit dem Stabkörper ab. Die Enden des Stabes sind dann besonders verschleißfest. Ein Befestigungsstück kann auf seiner gesamten Länge flach gedrückt sein, so dass der flach gedrückte und der hülsenartige Abschnitt des Befestigungsstückes in eins zusammenfallen. Vorzugsweise schließt sich jedoch an den flach gedrückten Längenabschnitt ein hülsenartiger, nicht flach gedrückter Längenabschnitt an. Dieser nicht flach gedrückte Abschnitt des Befestigungsstückes ist vorteilhaft, da er des Stabkörper im Übergangsbereich zwischen verformten und unverformten Bereich stützt. Zudem kann er weiteren Zwecken dienen. Z.B. kann er gekröpft ausgebildet sein, oder er kann zum Angriff der Zähne eines Stirnzahnrades dienen, das das Stabband antreibt, wobei der Stab durch die Hülse geschützt ist.

Der Stabkörper kann mit einer verschleißfesten Schicht, z. B. einem thermoplastischen PVC-Überzug, überzogen sein. Diese Schicht wird dann von den Befestigungsstücken mit umschlossen. Zwischen den Befestigungsstücken kann sich auch ein auf den Stabkörper aufgeschobener Schutzschlauch befinden, der z.B. aus Gummi bestehen kann.

Soweit hier die Rede von einem Stabkörper aus glasfaserverstärktem Kunststoff ist, versteht es sich, dass auch Stabkörper aus Karbon- oder sonstige Fasern in thermooder duroplastischen Kunststoffen zur Anwendung kommen können.

Weitere Einzelheiten der Erfindung werden anhand der Zeichnung erläutert, in der ein Ausführungsbeispiel der Erfindung dargestellt ist. Es zeigen:
- Fig. 1: einen Ausschnitt aus einem Stabband mit vier erfindungsgemäßen Stäben in der Draufsicht,
- Fig. 2: einen Abschnitt eines erfindungsgemäßen Stabes im Längsschnitt,
- Fig. 3: einen gegenüber Fig. 2 abgewandelte Ausführungsform eines erfindungsgemäßen Stabes in der Seitenansicht, und
- Fig. 4: eine weitere Ausführungsform der Erfindung

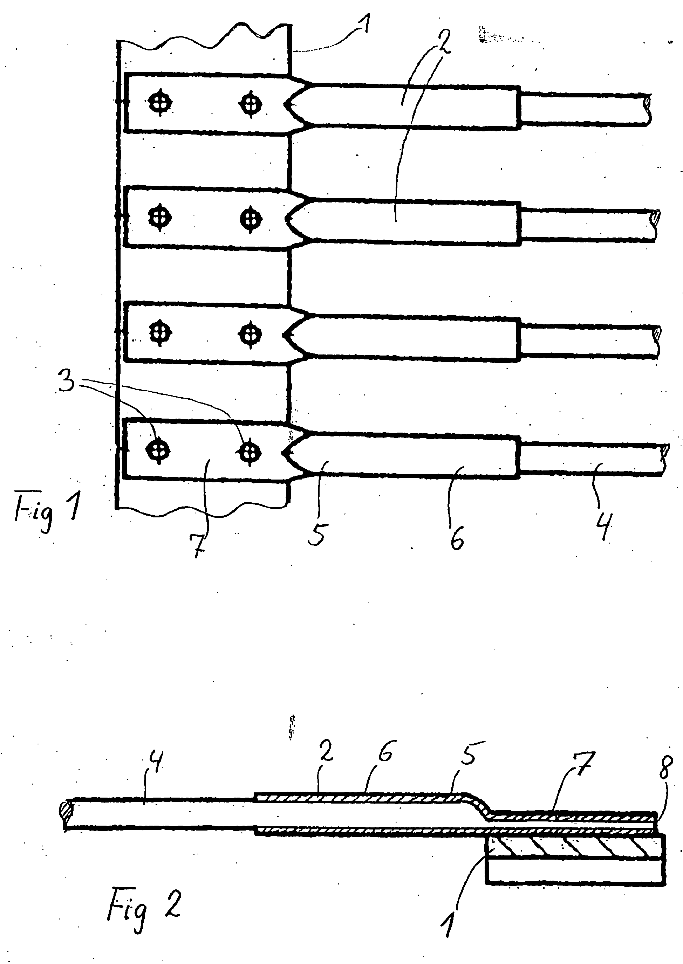

Ein Stabband, das z. B. bei einer Erntemaschine für Kartoffeln verwendet werden kann, besteht aus zwei an seinen Seiten angeordneten, endlosen, biegsamen, zugfesten Gurten 1, von denen in Fig. 1 lediglich einer dargestellt ist. Die Gurte 1 bestehen aus mit strangförmigen Festigkeitsträgern, z.B. Stahlcord, verstärktem Gummi. Sie sind durch parallel und im gleichen Abstand zueinander angeordnete Stäbe 2 miteinander verbunden. Die Stäbe sind durch Befestigungselemente 3, die sowohl die Enden der Stäbe 2 als auch die Gurte 1 durchsetzen, insb. durch Niete, an den Gurten 1 befestigt. Die Befestigung der Stäbe 2 mit den Gurt 1 kann z. B. auch durch Schrauben erfolgen, was eine bessere Auswechselbarkeit der Stäbe 2 ermöglicht.

Ein Stab 2 besteht jeweils aus einem Stabkörper 4 aus glasfaserverstärktem Kunststoff, an dessen Ende ein Befestigungsstück 5 angebracht ist. Ein gleichartiges Befestigungsstück befindet sich am nicht dargestellten gegenüberliegenden Ende des Stabes 2. Das Befestigungsstück 5 besteht aus Metall, z. B. aus Stahl, insbesondere rostfreiem Stahl, oder Aluminium.

Es weist zwei unterschiedliche Längenabschnitte 6 und 7 auf, wobei der Querschnitt des Längenabschnitts 6 in etwa kreisförmig ist, während der am Gurt 1 befestigte Längenabschnitt 7 flach ist. Wichtig ist nun, dass nicht nur der runde Abschnitt 6, sondern auch der flache Abschnitt 7 des Befestigungsstückes 5 einen Teil des Stabkörpers 4 umschließt. Der Stabkörper 4 schließt bei 8 bündig mit dem Befestigungsstück 5 ab.

Bei der Herstellung des Stabes 2 wird eine Hülse, die das Befestigungsstück 5 bildet, auf den Stabkörper 4 aufgeschoben und auf einem Längenabschnitt zusammen mit dem von ihr umschlossenen Material des Stabkörpers 4 zur Bildung des flachen Befestigungsabschnittes 7 in einem Gesenk bleibend verformt.

Die hülsenartigen Abschnitte 6 liegen, wie in Fig. 1 zu erkennen, bei dem Stabband in einer Reihe. Da die Stäbe 2 durch die hülsenartigen Abschnitte 6 besonders geschützt sind, eröffnet das die Möglichkeit, ein Stirnzahnrad mit zu den Stäben 2 paralleler Drehachse so anzuordnen, dass die Zähne zwischen die Stäbe 2 greifen und mit seinen Zahnflanken die hülsenartigen Abschnitte 6 beaufschlagen (nicht dargestellt). Auf diese Weise kann das Stabband angetrieben werden.

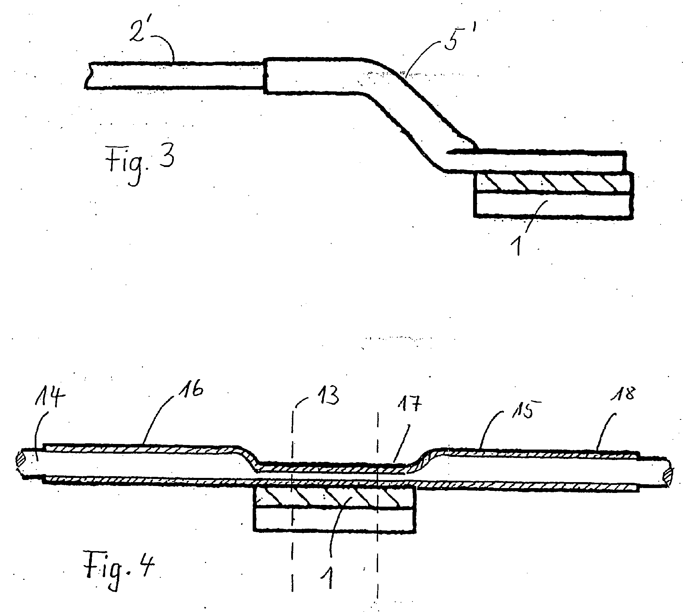

Fig. 3 zeigt einen Stab 2 mit einem gekröpften Befestigungsstück 5', durch das der Stab 2 oberhalb oder unterhalb der durch die Gurte 1 bestimmten Ebene angeordnet werden kann. Mit derartigen gekröpften Befestigungsstücken versehene Stäbe können z. B. im Wechsel mit flachen Stäben, die Befestigungsstücke 5 aufweisen, die nicht gekröpft sind, an einem Stabband angeordnet sein und als Mitnehmer für das Fördergut dienen. Aufgrund der Erfindung ist eine gekröpfte Ausbildung der Befestigungsstücke 5' in einfacher Weise herstellbar. Das Flachpressen der Enden der Befestigungsstücke 5' kann in einem Gesenk erfolgen, das auch die gekröpfte Form vorgibt.

In Fig. 3 ist dargestellt eine Kröpfung des Befestigungsstückes 5' senkrecht zur Ebene zwischen den Gurten 1. Die Kröpfung ist in auch einem beliebig anderen Winkel möglich (nicht dargestellt).

Bei sehr breiten Stabbändern kann es erforderlich sein, zwischen den an den Rändern befindlichen Gurten 1 noch einen oder sogar mehrere zusätzliche Gurte 1 anzuordnen. Aufgrund der Erfindung ist eine zuverlässige und einfach herstellbare Befestigung derartiger zusätzlicher Gurte auch in der Mitte der Stäbe möglich, wie es in Fig. 4 dargestellt ist. Dazu wird eine metallische Hülse auf den Stab an die entsprechende Stelle geschoben und in der Mitte flach gepresst. Es entsteht ein Befestigungsstück 15, das einen flachen Abschnitt 17 aufweist, der zur Befestigung am Gurt 1 durch Niete 13 oder dgl. geeignet ist, und der in hülsenartige Abschnitte 16 und 18 übergeht, deren Querschnitt nicht flach ist und die den Stabkörper 14 stützen. Die Abschnitte 16 und 18 können ggfls. auch eine wie in Fig. 3 dargestellte beid- oder einseitig gekröpfte Form erhalten (nicht dargestellt).

## Patentansprüche

1. Stab für umlaufende Stabbänder für landwirtschaftliche Maschinen zum Beispiel für Erntemaschinen, insb. für Siebstabbänder, wobei der Stab aus einem Stabkörper (4, 14) und aus zur Auflage auf biegsamen, zugfesten Gurten dienenden metallischen Befestigungsstücken (5, 5', 15) zusammengesetzt ist, wobei ein Befestigungsstück (5, 5', 15) mit einem abgeflachten Längenabschnitt (7, 17) auf einem der Gurte durch Niete oder dergl. befestigbar ist, und wobei ein Längenabschnitt des Befestigungsstückes (5, 15) hülsenartig zur Aufnahme des Stabkörpers (4, 14) ausgebildet ist, **dadurch gekennzeichnet, dass** der abgeflachte Längenabschnitt (7, 17) des Befestigungsstückes (5, 5', 15) hülsenartig ausgebildet ist und den Stabkörper (4, 14) aufnimmt .

2. Stab nach Anspruch 1, **dadurch gekennzeichnet, dass** der Stabkörper (4, 14) aus faser-, insbesondere glasfaserverstärktem Kunststoff besteht.

3. Stab nach Anspruch 1, **dadurch gekennzeichnet, dass** der Stabkörper (4, 14) zwei jeweils an seinen Enden angeordnete Befestigungsstücke (2) aufweist.

4. Stab nach Anspruch 1, **dadurch gekennzeichnet, dass** der Stabkörper (4, 14) zwischen seinen Enden ein oder mehrere Befestigungsstücke (15) aufweist

5. Stab nach Anspruch 4, **dadurch gekennzeichnet, dass** ein zwischen den Enden des Stabkörpers (4, 14) angeordnetes Befestigungsstück (15) in seiner Mitte einen abgeflachten, zur Befestigung eines Gurtes dienenden Längenabschnitt (17) aufweist, der zwischen zwei nicht abgeflachten hülsenartigen Längenabschnitten (16, 18) angeordnet ist.

6. Stab nach Anspruch 1, **dadurch gekennzeichnet, dass** ein Befestigungsstück (5') gekröpft ausgebildet ist in der Weise, dass ein erster und ein zweiter Längenabschnitt in zueinander parallelen Ebenen angeordnet sind.

7. Verfahren zur Herstellung eines Stabes nach einem oder mehreren der vorhergehenden Ansprüche, **dadurch gekennzeichnet, dass** hülsenförmige Metallkörper auf einen Stabkörper (4, 14) aufgeschoben und zur Bildung von Befestigungsstücken bleibend verformt werden.

## Claims

1. Rod for rotating rod conveyors for agricultural machines, for example for harvesters, especially for screening rod conveyors, the rod comprising a rod body (4, 14) and being composed of metallic fastening pieces (5, 5', 15) used for placing on flexible, tension-resistant belts, one fastening piece (5, 5', 15) being able to be fastened by a flattened longitudinal portion (7, 17) to one of the belts by rivets or the like, and one longitudinal portion of the fastening piece (5, 15) being designed sleeve-like for receiving the rod body (4, 14), **characterised in that** the flattened longitudinal portion (7, 17) of the fastening piece (5, 5', 15) is designed sleeve-like and receives the rod body (4, 14).

2. Rod according to claim 1, **characterised in that** the rod body (4, 14) comprises fibre-reinforced plastics material, especially glass-fibre-reinforced plastic.

3. Rod according to claim 1, **characterised in that** the rod body (4, 14) has two fastening pieces (2), one being arranged at each of its ends.

4. Rod according to claim 1, **characterised in that** the rod body (4, 14) has one or more fastening pieces (15) between its ends.

5. Rod according to claim 4, **characterised in that** a fastening piece (15) arranged between the ends of the rod body (4, 14) has in its centre a flattened longitudinal portion (17) which serves to fasten a belt and is arranged between two non-flattened sleeve-like longitudinal portions (16, 18).

6. Rod according to claim 1, **characterized in that** one fastening piece (5') is bent in such a way that a first and a second longitudinal portion are arranged in planes which are parallel to each other.

7. Method for producing a rod according to one or more of the preceding claims, **characterised in that** sleeve-shaped metal bodies are pushed onto a rod body (4, 14) and are permanently deformed to form fastening pieces.

## Revendications

1. Barre pour des transporteurs tournants à barres destinés à des machines agricoles, par exemple à des moissonneuses, en particulier des transporteurs à barre de filtrage, la barre étant composée d'un corps de barre (14, 14') et de pièces de fixation (5, 5', 15) métalliques destinées à être appliquées sur des courroies flexibles et résistantes à la traction, une pièce de fixation (5, 5' ; 15) munie d'une partie longitudinale (7, 17) aplanie pouvant être fixée à une des courroies par des rivets ou des éléments comparables et une partie longitudinale de la pièce de fixation (5, 15) a une forme de manchon pour recevoir le corps de barre (4, 14),
**caractérisée en ce que** la partie longitudinale (7, 17) aplanie de la pièce de fixation (5, 5', 15) a une forme de manchon et reçoit le corps de barre (4, 14).

2. Barre selon la revendication 1, **caractérisée en ce que** le corps de barre (4, 14) est en matière plastique renforcée par des fibres, en particulier des fibres de verre.

3. Barre selon la revendication 1, **caractérisée en ce que** le corps de barre (4, 14) comporte deux pièces de fixation (2) placées à chacune de ses extrémités.

4. Barre selon la revendication 1, **caractérisée en ce que** le corps de barre (4, 14) comporte entre ses extrémités une ou plusieurs pièces de fixation (15).

5. Barre selon la revendication 4, **caractérisée en ce qu'**une pièce de fixation (15) placée entre les extrémités du corps de barre (4, 14) comporte au milieu une partie longitudinale (17) aplanie destinée à fixer une courroie et placée entre deux parties longitudinales (16, 18) non aplanies en forme de manchon.

6. Barre selon la revendication 1, **caractérisée en ce qu'**une pièce de fixation (5') est coudée de telle manière qu'une première et une deuxième parties longitudinales se trouvent dans des plans parallèles l'un par rapport à l'autre.

7. Procédé pour fabriquer une barre selon une ou plusieurs des revendications précédentes, **caractérisé en ce que** des corps métalliques en forme de manchon sont enfilés sur un corps de barre (4, 14) et sont déformés durablement pour obtenir des pièces de fixation.
